# EUROPEAN PATENT APPLICATION

(11) **EP 3 957 880 A1**
(43) Date of publication of application: **23.02.2022**
(21) Application number: 20400014.5
(22) Date of filing: 20.08.2020
(51) Int. Cl.: F16J 15/02, F16J 15/06, B64C 1/14, E06B 5/16

(54) **A TIGHTNESS SEAL FOR DOOR**

(71) Applicant: AIRBUS HELICOPTERS DEUTSCHLAND GmbH, 86609 Donauwörth (DE); AIRBUS HELICOPTERS, 13725 Marignane Cedex (FR)
(72) Inventor: VELOMAHITA, Giovannie, 13100 Aix-en-Provence (FR); MOUSSY, François, 13100 Aix-en-Provence (FR); ARNOULD, Pierre, 13300 Salon de Provence (FR)
(74) Representative: GPI Brevets

(57) **Abstract**

The present embodiments relate to a tightness seal (300) for a door (200) with a door leaf (210) and a door frame (220). The present embodiments further relate to door (200) having such a tightness seal (300) and to an aircraft (100), (150) with at least one such door (200). The tightness seal (300) may include an elongated body (310) with an intumescent coating (320). The intumescent coating (320) is adapted to providing a heat shield for the elongated body (310) such that the elongated body (310) with the intumescent coating (320) is suitable to form at least a fireproof barrier.

## Description

The present embodiments relate to a tightness seal for a door. The present embodiments further relate to a door having such a tightness seal and to an aircraft with at least one such door.

In some applications, doors are required to ensure tightness between the environments that they separate. Such doors can be found in various different applications. Examples for such applications include doors in aircrafts, spacecrafts, pressure chambers, submarines, etc. When such doors are used in aircrafts, they usually fulfill the following major functions: they close the aircrafts in operation for maintaining a required internal pressure therein, they contribute to carrying flight loads in corresponding cargo compartments, they allow passengers and crew to enter and exit the aircrafts, they allow external access to the corresponding lower aircraft compartments, and they allow external access to engine compartments.

Some doors must be suitable to form a fireproof and/or airtight barrier. For this purpose, those doors are equipped with an appropriate seal. The majority of seals are made of silicone and reinforced with one or more layer of fabrics that are able to withstand fire.

The document US 9,151,106 B2 describes a fire door stop system for retrofitting a fire door assembly so as to bring the assembly into compliance with fire safety codes. The fire door stop system has a profile strip that is attachable to a fire door frame. An edge of the profile strip extends outward from the frame in a line with a face of the soffit against which the pull edge of the fire door closes. The fire door stop system further includes, as needed, edge protectors for a wood fire door, such as a horizontal edge protector, a vertical edge protector, and a bottom-edge extender, and a latch protector.

The document US 9,868,545 B2 describes a protective assembly and structural element for an aircraft comprising a portion of an attachment pylon primary structure. The attachment pylon primary structure portion is at least partially covered by a protective assembly comprising a layer forming a firewall and a thermally insulating layer, the thermally insulating layer being located between the layer forming a firewall and the attachment pylon primary structure portion. The protective assembly is attached to the pylon primary structure by fasteners axially arranged in pairs, one of each pair extending through the protective assembly and the other of each pair extending through the pylon primary structure.

Document US 2002/0113377 A1 describes a gas seal between a frame and a movable member mounted on the frame, the gas seal comprising an elongate support member having opposed upper and lower faces and opposed first and second sides, and a sealing lip extending along and being joined to the support member, the sealing lip having an anchor portion and a sealing portion, the sealing portion being spaced from the support member by said anchor portion and having an edge which defines a terminal sealing edge of said sealing lip, the sealing lip normally residing in an inoperative position and being movable relative to the support member to an operative position, said anchor and sealing portions extending laterally from the first side when the sealing lip resides in said inoperative position whereas when the sealing lip resides in said operative position said anchor portion resides in face to face contact with said first side with said seal portion projecting laterally beyond the upper face of said support member.

Document WO 2001/40610 A1 describes a combined smoke and fire seal that comprises an elongate body formed from an intumescent material to define a fire seal and at least one elongate flange extending along the length of the body and projecting laterally therefrom to define a smoke seal, the elongate body and flange being integrally connected to one another.

Document US 3,955,330 A describes a smoke stop for doors. The smoke stop consists of a metal frame with a slot therein extending along substantially the entire length of the frame on the door side thereof; a continuous tube within the slot, the continuous tube having retarded decomposability at the kindling temperature of the door and the continuous tube having one or more fins running the entire length thereof and projecting outward on the door side of the frame; and an intumescent material completely enclosed within the continuous tube. When the door is closed and the frame and door are subjected to flames, the intumescent material expands causing the sealing of the space between the frame and the door and thereby providing a smoke stop between the door and the frame.

However, many prior art seals that fulfill the requirements of tightness and fire protection are very stiff and complex. Such seals often carry an excessive weight and are very costly.

It is, therefore, an objective to provide a new tightness seal for a door with a door leaf and a door frame, whereby the door leaf is adapted to closing the door frame. Furthermore, it is an objective to provide a door with such a new tightness seal. Moreover, it is an objective to provide an aircraft with such a door that has such a new tightness seal. These objectives are solved by a tightness seal comprising the features of claim 1, by a door comprising the features of claim 9, and by an aircraft comprising the features of claim 14.

More specifically, a tightness seal for a door with a door leaf and a door frame, wherein the door leaf is adapted to closing the door frame, may comprise an elongated body that is made at least in part from an elastically deformable material that is fire resistant at least up to a predetermined temperature, wherein the elongated body comprises an intumescent coating that is adapted to providing a heat shield for the elongated body in case of an exposure to a temperature that is above the predetermined temperature such that the elongated body with the intumescent coating is suitable to form at least a fireproof barrier. The elongated body may have a cross section that comprises a straight-shaped foot portion that is adapted to be attached to at least one of the door leaf or the door frame, and a round-shaped head portion that is adapted to be squeezed between the door leaf and the door frame when the door is in a closed state, such that the door is at least water tight or air tight.

The tightness seal may ensure water tightness and/or air tightness of the door. If desired, the tightness seal may ensure at least one of sand tightness, dust tightness, or soundproofing of the door. An intumescent coating may be used as a fire protection. Thus, the door with the tightness seal having an intumescent coating may further be fireproof.

The tightness seal may have an elastically deformable body with a sufficient stiffness that allows for an exposure to high temperatures. The elastically deformable body may be coated with the intumescent coating.

In case of a fire, an irreversible chemical and physical reaction may occur as soon as the intumescent coating reaches its activation temperature. An intumescent reaction causes the expansion of the coating, thereby building a char foam. The built char foam may stop the propagation of fire to other areas.

The thermal conductivity of the char foam may decrease with intumescence. Thus, the char foam may act as a heat shield. The char foam may reduce outgassing self-ignition risks.

Illustratively, in an aircraft, such a tightness seal may be used as an air intake seal, a seal for an air-cooled oil cooler inlet, a cargo door's seal, and/or as a firewall and cowlings' seal.

The tightness seal needs to be replaced if the intumescent material is activated (e.g., in case of a fire). However, the tightness seal may be easy to replace, leading to a potential gain in maintenance time and cost compared to prior art tightness seals.

Moreover, additional firewalls and/or fireproof seals on doors may be omitted. Thus, the door may have a significant lower weight compared to doors with traditional sealing solutions.

Furthermore, the tightness seal may have a lower stiffness than current door seals. Thus, the new tightness seal doesn't compromise the opening and the closing of doors or cowlings.

The tightness seal reduces heat flows, because the coefficient of thermal conductivity of the char foam built after intumescence is lower than the thermal conductivity of the tightness seal before intumescence.

According to one aspect, the round-shaped head portion and the straight-shaped foot portion are integrally formed.

According to one aspect, the round-shaped head portion and the straight-shaped foot portion form a P-shaped cross section.

According to one aspect, the intumescent coating comprises at least one of a methylol melamine, a phenol-formaldehyde resin, a pentaerythritol, a monomer, a dimer, a trimer, a starch, a dextrin, a sorbitol, a mannitol, or a char former polymer.

According to one aspect, the elastically deformable material comprises at least one of a natural rubber or a synthetic polymer.

According to one aspect, the intumescent coating forms a char foam in case of the exposure to a temperature that is above the predetermined temperature.

According to one aspect, the char foam has a lower thermal conductivity than the intumescent coating before intumescence.

According to one aspect, the intumescent coating before the exposure to a temperature that is above the predetermined temperature has a thickness that is smaller than 2mm and the char foam after the exposure to a temperature that is above the predetermined temperature has a thickness that is greater than 20mm.

Furthermore, a door with a door leaf and a door frame, wherein the door leaf is adapted to closing the door frame, may comprise a tightness seal as described above.

According to one aspect, the tightness seal extends around the circumference of the door leaf when the door is in the closed state.

According to one aspect, the door further comprises a plurality of fasteners that attaches the straight-shaped foot portion of the elongated body of the tightness seal to at least one of the door leaf or the door frame.

According to one aspect, the plurality of fasteners comprises at least one of a nut and bolt, a screw, or a rivet.

According to one aspect, the door further comprises an adhesive that attaches the straight-shaped foot portion of the elongated body of the tightness seal to at least one of the door leaf or the door frame.

Moreover, an aircraft may comprise at least one door as described above.

According to one aspect, the at least one door is at least one of a cabin access door, a cargo deck access door, or an engine deck access door.

Embodiments are outlined by way of example in the following description with reference to the attached drawings. In these attached drawings, identical or identically functioning components and elements are labeled with identical reference numbers and characters and are, consequently, only described once in the following description.
- Figure 1A shows a perspective view of an illustrative aircraft having several doors with tightness seals in accordance with some embodiments,
- Figure 1B is a diagram of another illustrative aircraft having several doors with tightness seals in accordance with some embodiments,
- Figure 2A is a diagram of an illustrative door with an illustrative tightness seal that is compressed between the door leaf and the door frame of the door in accordance with some embodiments,
- Figure 2B is a diagram of the illustrative door of Figure 2B in which a plurality of fasteners attaches the illustrative tightness seal to the door frame in accordance with some embodiments,
- Figure 2C is a diagram of a cross section of the illustrative door of Figure 2A in which the illustrative tightness seal has a P-shaped cross section in accordance with some embodiments,
- Figure 3A is a diagram of an illustrative door with an illustrative tightness seal at nominal between the door leaf and the door frame of the door in accordance with some embodiments,
- Figure 3B is a diagram of the illustrative door of Figure 3B in which a plurality of fasteners attaches the illustrative tightness seal to the door frame in accordance with some embodiments, and
- Figure 3C is a diagram of a cross section of the illustrative door of Figure 3A in which the illustrative tightness seal has a P-shaped cross section in accordance with some embodiments.

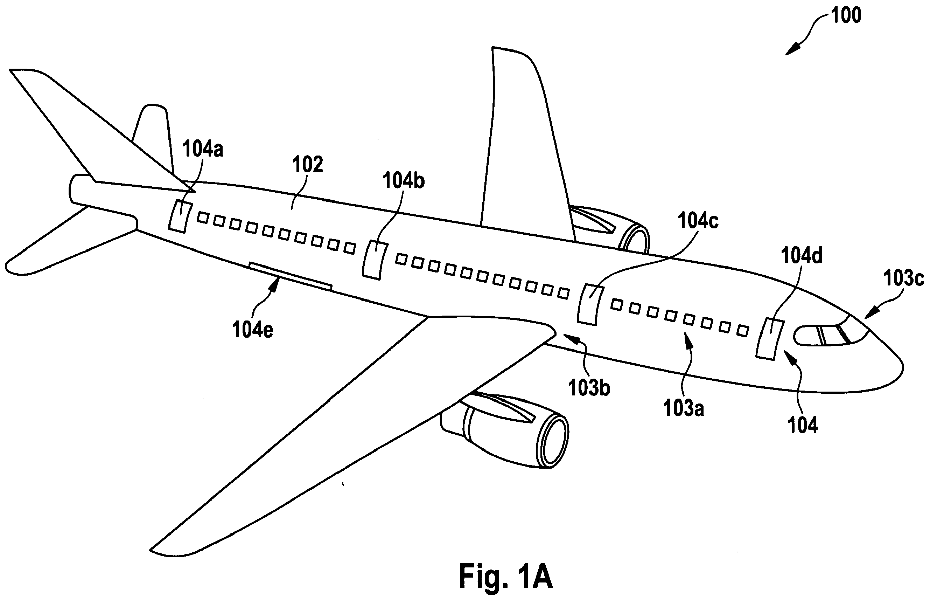

Figure 1A shows an aircraft 100 with an aircraft airframe 102, which is sometimes also referred to as fuselage 102. Illustratively, the aircraft 100 comprises a passenger cabin 103a, a cargo deck 103b, and a flight deck or cockpit 103c.

If desired, the aircraft 100 is accessible via a plurality of aircraft doors 104, which exemplarily comprises several cabin access doors 104a, 104b, 104c and 104d, as well as one or more cargo deck access doors 104e. By way of example, the passenger cabin 103a and the flight deck 103c are accessible via the cabin access doors 104a, 104b, 104c and 104d, and the cargo deck 103b is accessible via the one or more cargo deck access doors 104e.

The plurality of aircraft doors 104 may be adapted to close the aircraft airframe 102 (i.e., fuselage 102 of the aircraft 100) in a fluid-tight manner. Illustratively, at least one of the plurality of aircraft doors 104 is associated with a tightness seal. If desired, each one of the plurality of aircraft doors 104 is associated with a tightness seal.

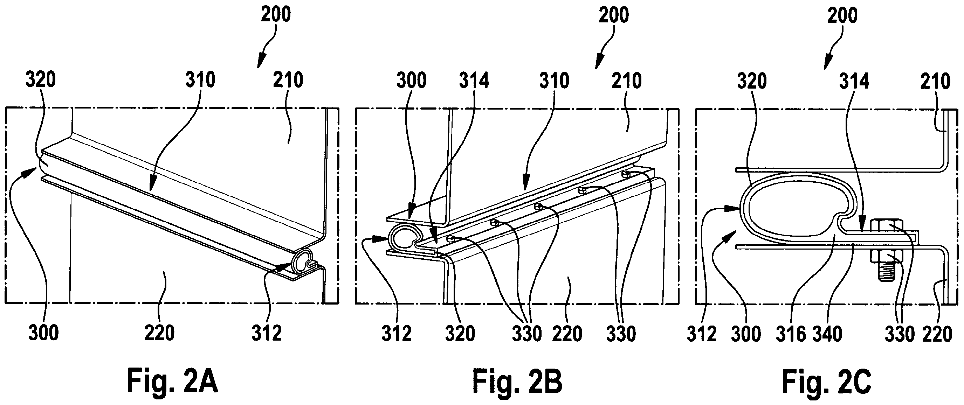

Thus, aircraft 100 may include at least one door 200 with a tightness seal 300 as described below with reference to Figures 2A to 3C. In other words, one or more of the plurality of aircraft doors 104 may be a door 200 with a tightness seal 300 as described below with reference to Figures 2A to 3C.

As shown in Figure 1A, aircraft 100 is embodied by an airplane. However, the present embodiments are not limited to airplanes. The present embodiments may likewise be applied to other aircrafts such as helicopters, multicopters, drones, etc.

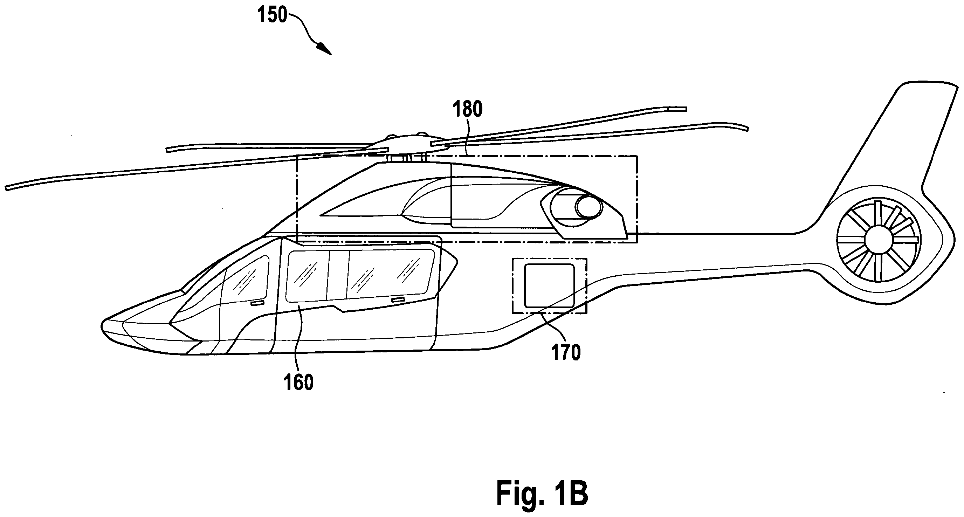

Figure 1B is a diagram of a helicopter 150 having several doors. As shown in Figure 1B, helicopter 150 may have cabin access door 160, cargo deck access door 170, and engine deck access door 180.

If desired, at least one of cabin access door 160, cargo deck access door 170, or engine deck access door 180 may be equipped with a tightness seal. The tightness seal may be suitable to form at least a fireproof barrier. If desired, the tightness seal may be embodied by tightness seal 300 of Figures 2A to 3C.

Figures 1A and 1B show different embodiments of doors with tightness seals in different types of aircraft. However, the present embodiments are not limited to aircrafts. Instead, any door with a tightness seal that is suitable to form at least a fireproof barrier is likewise contemplated. For example, the present embodiments may be applied to spacecraft, vessels, or any other system that represents a fire hazard and can be closed off by a door. However, for purposes of illustration, the present door is hereinafter described with respect to aircraft doors.

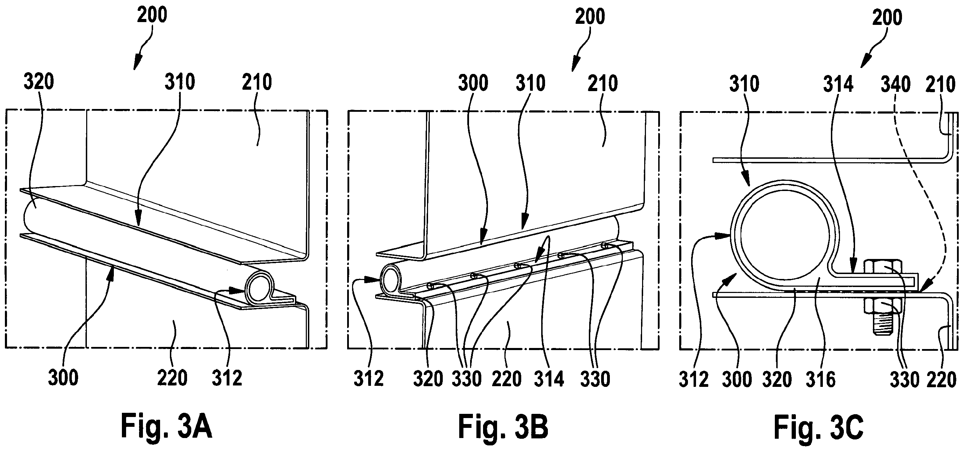

Figures 2A to 2C and 3A to 3C are diagrams of an illustrative door 200 with an illustrative tightness seal 300. Illustratively, Figures 2A to 2C and 3A to 3C show door 200 in a closed state.

Door 200 may include door frame 220 and door leaf 210. The door leaf 210 may be adapted to closing the door frame 220. Door 200 may be in a closed state when the door leaf 210 completely closes the door frame 220 and in an opened state when the door leaf 210 fails to completely close the door frame 220.

Figures 2A and 3A show a perspective view of door 200 from a first side, and Figures 2B and 3B show a perspective view of door 200 from a second side.

As an example, Figures 2A and 3A may show door 200 from the outside of an aircraft (e.g., aircraft 100 of Figure 1A or aircraft 150 of Figure 1B), and Figures 2B and 3B may show door 200 from the inside of the aircraft. As another example, Figures 2A and 3A may show door 200 from the inside of the aircraft, and Figures 2B and 3B may show door 200 from the outside of the aircraft.

Illustratively, door 200 may be equipped with a tightness seal 300. By way of example, tightness seal 300 may include an elongated body 310 as shown in Figures 2A, 2B, 3A, and 3B. The elongated body 310 of tightness seal 300 may extend around the circumference of the door leaf 210 when the door 200 is in the closed state.

The tightness seal 300 may be at least partially in a nominal state (i.e., uncompressed) when the door 200 is in an opened state. If desired, the entirety of the tightness seal 300 may be in a compressed state (i.e., compressed between the door leaf 210 and the door frame 220) when the door 200 is in the closed state.

By way of example, the tightness seal 300 may fill air gaps between the door leaf 210 and door frame 220 when the door 200 is in the closed state. Air gaps between the door leaf 210 and the door frame 220 may have different causes. For example, tolerances during manufacturing of the door leaf 210 and the door frame 220 or imprecision during the assembly of door leaf 210 relative to door frame 220 may lead to air gaps between the door leaf 210 and the door frame 220 when the door 200 is in the closed state.

Illustratively, the tightness seal 300 may ensure water tightness of the door 200 when the door 200 is in the closed state. For example, the tightness seal 300 may prevent water from leaking through the door 200 in case of rain or a fluid leakage.

If desired, the tightness seal 300 may ensure air tightness of the door 200 when the door 200 is in the closed state. For example, the tightness seal 300 may prevent air from flowing through the door 200 in windy conditions.

Figures 2C and 3C show a cross section of door 200 with tightness seal 300. As shown in Figures 2C and 3C, the cross section of tightness seal 300 may include a straight-shaped foot portion 314 and a round-shaped head portion 312. If desired, the round-shaped head portion 312 and the straight-shaped foot portion 314 may be integrally formed. For example, the round-shaped head portion 312 and the straight-shaped foot portion 314 may form a P-shaped cross section.

The round-shaped head portion 312 may be adapted to be squeezed between the door leaf 210 and the door frame 220 when the door 200 is in a closed state, such that the door 200 is at least water tight or air tight.

Thus, Figures 2A to 2C show the illustrative tightness seal 300 compressed between the door leaf 210 and the door frame 220, while Figures 3A to 3C show the illustrative tightness seal 300 in a nominal (i.e., uncompressed) state.

As shown in Figures 2B and 3B, a plurality of fasteners 330 may attach the illustrative tightness seal 300 to the door frame 220. For example, the plurality of fasteners 330 may attach the straight-shaped foot portion 314 of tightness seal 300 to the door frame 220.

Illustratively, the plurality of fasteners 330 may include at least one of a nut and bolt, a screw, or a rivet. If desired, an adhesive 340 may attach the tightness seal 300 to at least one of the door leaf 210 or the door frame 220.

By way of example, the tightness seal 300 may be made at least in part from an elastically deformable material 316. The elastically deformable material 316 may include at least one of a natural rubber or a synthetic polymer. If desired, the elastically deformable material 316 may be fire resistant at least up to a predetermined temperature.

For example, the elastically deformable material 316 may have at least a predetermined stiffness. The predetermined stiffness may prevent any damage to the elastically deformable material 316 as long as the elastically deformable material 316 is exposed to a temperature that is below the predetermined temperature. If desired, the predetermined stiffness may ensure air and water tightness of the door 200 when the round-shaped head-portion 312 of the tightness seal 300 is compressed between the door leaf 210 and the door frame 220.

Illustratively, the elongated body 310 may include an intumescent coating 320. If desired, the intumescent coating 320 may enclose entirely the elastically deformable material 316.

The intumescent coating 320 may include at least one of a methylol melamine, a phenol-formaldehyde resin, a pentaerythritol, a monomer, a dimer, a trimer, a starch, a dextrin, a sorbitol, a mannitol, or a char former polymer.

Illustratively, the intumescent coating 320 may be adapted to providing a heat shield for the elongated body 310 in case of an exposure to a temperature that is above the predetermined temperature. Thus, the elongated body 310 with the intumescent coating 320 may be suitable to form at least a fireproof barrier.

For example, the intumescent coating 320 may swell up and form a char foam in case of the exposure to a temperature that is above the predetermined temperature. Illustratively, the intumescent coating 320 before intumescence (i.e., before swelling up) may have a thickness that is smaller than 2mm, while the char foam (i.e., after swelling up) may have a thickness that is greater than 20mm.

The char foam from the intumescent coating 320 after intumescence may have a lower thermal conductivity than the intumescent coating 320 before intumescence.

If desired, the intumescent coating 320 may be suitable to form an airtight barrier. For example, the intumescent coating 320 after intumescence may prevent flammable gases from leaking through the door 200.

As an example, consider the scenario in which a fire occurs on one side of the door 200. For example, a fire may occur inside the engine deck that is separated from the outside of aircraft 150 of Figure 1B by engine deck access door 180. Consider further that the engine deck access door 180, which includes a door 200 with a tightness seal 300 according to Figures 2A to 3C, is in a closed state.

In this scenario, the elastically deformable material 316 of the elongated body 310 of the tightness seal 300 may ensure fire resistance of the tightness seal 300 at least up to a predetermined temperature. The predetermined temperature may be selected to be the activation temperature of the intumescent coating 320. If desired, the predetermined temperature may be selected to be below the activation temperature of the intumescent coating 320.

When the temperature at the tightness seal 300 reaches the predetermined temperature, the intumescent coating 320 may start to swell up and form a char foam. The intumescent coating 320 may be thinner than 2mm before intumescence.

The char foam may reach a thickness that is greater than 20mm. Illustratively, the char foam may have a lower thermal conductivity than the intumescent coating 320 before intumescence. Thus, the char foam may protect the elastically deformable material 316 from the heat and the flames of the fire, thereby providing a heat shield for the elongated body 310.

Thereby, the intumescent coating 320 may be suitable to form a fireproof barrier between the inside and the outside of the engine deck access door 180 of Figure 1B. If desired, the intumescent coating 320 may be suitable to form an airtight barrier between the inside and the outside of the engine deck access door 180.

Thus, the tightness seal 300 with the elongated body 310 that includes an elastically deformable material 316 enclosed by an intumescent coating 320 may avoid a propagation of the fire, minimize the transfer of heat, and avoid outgassing self-ignition risks.

It should be noted that modifications to the above described embodiments are within the common knowledge of the person skilled in the art and, thus, also considered as being part of the present invention.

For example, as shown in Figures 2B and 3B, a plurality of fasteners 330 may attach the illustrative tightness seal 300 to the door frame 220. However, the plurality of fasteners 330 may attach the illustrative tightness seal 300 to the door leaf 210, if desired. For example, the plurality of fasteners 330 may attach the straight-shaped foot portion 314 of tightness seal 300 to the door leaf 210.

Furthermore, the straight-shaped foot portion 314 of the elongated body 310 of Figures 2B and 3B is running along the entire elongated body 310. However, the elongated body 310 may have a straight-shaped foot portion 314 only in areas in which fasteners attach the straight-shaped foot portion 314 to the door leaf 210 or the door frame 220, if desired.

Moreover, the round-shaped head portion 312 of the elongated body 310 is shown in Figure 3C to be a circle. However, the round-shaped head portion 312 of the elongated body 310 may be oval or elliptical instead, if desired.

### Reference List

- 100: aircraft
- 102: aircraft airframe, fuselage
- 103a: aircraft passenger cabin
- 103b: aircraft cargo deck
- 103c: aircraft flight deck
- 104: aircraft door
- 104a, 104b, 104c, 104d: cabin access doors
- 104e: cargo deck access door
- 150: aircraft
- 160: cabin access door
- 170: cargo deck access door
- 180: engine deck access door
- 200: door
- 210: door leaf
- 220: door frame
- 300: tightness seal
- 310: elongated body
- 312: round-shaped head portion
- 314: straight-shaped foot portion
- 316: elastically deformable material
- 320: intumescent coating
- 330: fastener
- 340: adhesive

## Claims

1. A tightness seal (300) for a door (200) with a door leaf (210) and a door frame (220), wherein the door leaf (210) is adapted to closing the door frame (220), comprising:
an elongated body (310) that is made at least in part from an elastically deformable material (316) that is fire resistant at least up to a predetermined temperature, wherein the elongated body (310) comprises an intumescent coating (320) that is adapted to providing a heat shield for the elongated body (310) in case of an exposure to a temperature that is above the predetermined temperature such that the elongated body (310) with the intumescent coating (320) is suitable to form at least a fireproof barrier, and wherein the elongated body (310) has a cross section that comprises:
a straight-shaped foot portion (314) that is adapted to be attached to at least one of the door leaf (210) or the door frame (220), and
a round-shaped head portion (312) that is adapted to be squeezed between the door leaf (210) and the door frame (220) when the door (200) is in a closed state, such that the door (200) is at least water tight or air tight.

2. The tightness seal (300) of claim 1, wherein the round-shaped head portion (312) and the straight-shaped foot portion (314) are integrally formed.

3. The tightness seal (300) of claim 2, wherein the round-shaped head portion (312) and the straight-shaped foot portion (314) form a P-shaped cross section.

4. The tightness seal (300) of any one of the preceding claims, wherein the intumescent coating (320) comprises at least one of a methylol melamine, a phenol-formaldehyde resin, a pentaerythritol, a monomer, a dimer, a trimer, a starch, a dextrin, a sorbitol, a mannitol, or a char former polymer.

5. The tightness seal (300) of any one of the preceding claims, wherein the elastically deformable material (316) comprises at least one of a natural rubber or a synthetic polymer.

6. The tightness seal (300) of any one of the preceding claims, wherein the intumescent coating (320) forms a char foam in case of the exposure to a temperature that is above the predetermined temperature.

7. The tightness seal (300) of claim 6, wherein the char foam has a lower thermal conductivity than the intumescent coating (320) before intumescence.

8. The tightness seal (300) of claim 6, wherein the intumescent coating (320) before the exposure to a temperature that is above the predetermined temperature has a thickness that is smaller than 2mm, and wherein the char foam after the exposure to a temperature that is above the predetermined temperature has a thickness that is greater than 20mm.

9. A door (200) with a door leaf (210) and a door frame (220), wherein the door leaf (210) is adapted to closing the door frame (220), the door (200) comprising a tightness seal (300) of any one of the preceding claims.

10. The door (200) of claim 9, wherein the tightness seal (300) extends around the circumference of the door leaf (210) when the door (200) is in the closed state.

11. The door (200) of claim 9, further comprising:
a plurality of fasteners (330) that attaches the straight-shaped foot portion (314) of the elongated body (310) of the tightness seal (300) to at least one of the door leaf (210) or the door frame (220).

12. The door (200) of claim 11, wherein the plurality of fasteners (330) comprises at least one of a nut and bolt, a screw, or a rivet.

13. The door (200) of claim 9, further comprising:
an adhesive (340) that attaches the straight-shaped foot portion (314) of the elongated body (310) of the tightness seal (300) to at least one of the door leaf (210) or the door frame (220).

14. An aircraft (100, 150) comprising at least one door (200) of any one of claims 9 to 13.

15. The aircraft (100, 150) of claim 14, wherein the at least one door (200) is at least one of a cabin access door (104a, 104b, 104c, 104d, 160), a cargo deck access door (104e, 170), or an engine deck access door (180).
